# EUROPÄISCHE PATENTANMELDUNG

(11) **EP 1 422 094 A1**
(43) Veröffentlichungstag der Anmeldung: **26.05.2004**
(21) Anmeldenummer: 03026206.7
(22) Anmeldetag: 14.11.2003
(51) Int. Cl.: B60J 5/00, B60J 5/04, B60R 13/02

(54) **Innenverkleidung für eine Kraftfahrzeugtür**

(30) Priorität: 14.11.2002 DE 10253146
(71) Anmelder: DaimlerChrysler AG, 70567 Stuttgart (DE)
(72) Erfinder: Gehrlein, Herbert, 76773 Kuhardt (DE); Kohl, Volker, 72160 Horb-Altheim (DE); Polzin, Stephan, 47441 Moers (DE); Reitz, Kai, 45478 Mühlheim/Ruhr (DE); Steupert, Jürgen P., Detroit Michigan 48202 (US)

(57) **Zusammenfassung**

Eine Innenverkleidung für eine Kraftfahrzeugtür umfasst ein flächiges Verkleidungselement, das einen im eingebauten Zustand sichtbaren, spiegelnden Oberflächenbereich aufweist.

## Beschreibung

Die vorliegende Erfindung betrifft eine Innenverkleidung für eine Kraftfahrzeugtür.

Innenverkleidungen für Kraftfahrzeugtüren sind grundsätzlich bekannt. Sie dienen u.a. dazu, an bzw. in der Kraftfahrzeugtür vorhandene mechanische Elemente wie z.B. Fensterheber oder Türöffner zu verdecken und der Kraftfahrzeugtür in ihrem Inneren ein gefälliges Aussehen zu verleihen. Darüber hinaus dienen solche Innenverkleidungen teilweise auch als Halter für Bedienelemente wie z.B. Betätigungsschaltern für elektrische Fensterheber.

Damit ein Kraftfahrzeug möglichst viele Funktionen erfüllen kann, wäre es wünschenswert, dass die Innenverkleidung für eine Kraftfahrzeugtür weitere Funktionen übernehmen könnte.

Der vorliegenden Erfindung liegt daher die Aufgabe zugrunde, eine Innenverkleidung für eine Kraftfahrzeugtür bereitzustellen, die eine über die reine Verdeckung von mechanischen Elementen hinausgehende Funktion aufweist.

Die Aufgabe wird gelöst durch eine Innenverkleidung für eine Kraftfahrzeugtür mit den Merkmalen des Anspruchs 1.

Die erfindungsgemäße Innenverkleidung für eine Kraftfahrzeugtür umfasst ein flächiges Verkleidungselement, das einen im eingebauten Zustand sichtbaren, spiegelnden Oberflächenbereich aufweist.

Unter einem spiegelnden Oberflächenbereich wird dabei ein Oberflächenbereich verstanden, der auf ihn auftreffendes Licht im Sinne der geometrischen Optik spiegelnd reflektiert, wobei vorzugsweise keine wesentliche Farbänderung bzw. Filterung des auftreffenden Lichts auftritt. Je nach Qualität der Oberfläche können dabei noch kleine Anteile des auftreffenden Lichts gestreut werden.

Die erfindungsgemäße Innenverkleidung kann mittels des flächigen Verkleidungselements verschiedene Funktionen erfüllen.

Der spiegelnde Oberflächenbereich kann zum einen zur Überwachung eines Bereichs neben einem Kraftfahrzeug verwendet werden, das eine mit der erfindungsgemäßen Innenverkleidung ausgestattete Kraftfahrzeugtür aufweist. Eine Person auf einem der Kraftfahrzeugtür benachbarten Sitz kann die Kraftfahrzeugtür entsprechend weit öffnen und den Bereich neben der Kraftfahrzeugtür überwachen, indem sie die spiegelnde Oberfläche als Spiegel verwendet.

Zum anderen kann bei Anbringung der erfindungsgemäßen Innenverkleidung an Kraftfahrzeugtüren geeigneter Kraftfahrzeuge, insbesondere Lastkraftwagentüren, die spiegelnden Oberfläche bei geöffneter Kraftfahrzeugtür als Spiegel verwendet werden, in dem sich eine vor der Kraftfahrzeugtür stehende Person beispielsweise zum Kämmen, Rasieren oder auch zur Gesichtspflege betrachten kann.

Weiterhin kann eine solche Innenverkleidung auch eine Warnfunktion übernehmen, beispielsweise wenn eine damit ausgestattete Kraftfahrzeugtür nachts geöffnet wird und ein auf das Verkleidungselement mit der spiegelnden Oberfläche fallender Lichtstrahl, beispielsweise eines anderen Fahrzeugs, reflektiert wird.

Damit erfüllt die erfindungsgemäße Innenverkleidung zusätzliche Funktionen, zu deren Bereitstellung in einem Kraftfahrzeug sonst zusätzliche Einrichtungen erforderlich wären.

Weiterbildungen und bevorzugte Ausführungsformen der Erfindung sind in der Beschreibung, den Ansprüchen und den Zeichnungen beschrieben.

Es ist bevorzugt, dass das Verkleidungselement an bzw. in der Innenverkleidung so angeordnet ist, dass es nach Verbindung der Innenverkleidung mit der Kraftfahrzeugtür unterhalb einer Öffnung für ein Fenster in der Kraftfahrzeugtür angeordnet ist. Diese Anordnung erlaubt generell eine einfache Betrachtung eines Bereichs unmittelbar neben dem Fahrzeug, wenn die Kraftfahrzeugtür halb oder ganz geöffnet ist. Bei einer besonders bevorzugten Verwendung in einem Lastkraftwagen ergibt sich darüber hinaus der Vorteil, dass das Verkleidungselement mit der spiegelnden Oberfläche bei geöffneter Kraftfahrzeugtür als Spiegel dienen kann, in dem sich eine Person einfach betrachten kann. Eine solche Funktion kann insbesondere für Lastkraftwagenfahrer von Nutzen sein, die lange Fahrten, ggf. mit Übernachtungen in dem Lastkraftwagen, durchführen.

Dabei ist es weiterhin bevorzugt; dass das flächige Verkleidungselement in der Innenverkleidung so angeordnet ist, dass es im Wesentlichen parallel zu einer Fläche der Kraftfahrzeugtür angeordnet ist, wenn die Innenverkleidung an der Kraftfahrzeugtür angebracht ist. Auf dies Weise wird der Raumbedarf für die Innenverkleidung gering gehalten. Weiterhin ist es durch Bewegung der Kraftfahrzeugtür sehr einfach möglich, den Blickwinkel zur Betrachtung eines an dem spiegelnden Oberflächenbereich gespiegelten Bildes einzustellen.

Um die Betrachtung zu erleichtern, ist es bevorzugt, dass die Fläche des spiegelnden Oberflächenbereichs größer als 30 cm² ist. Besonders bevorzugt ist die Fläche des spiegelnden Oberflächenbereichs größer als 100 cm². Die als Spiegel verwendbare Fläche der Innenverkleidung ist in diesem Fall ungewöhnlich groß. Insbesondere ist der spiegelnde Oberflächenbereich größer als übliche Spiegel in einer Sonnenblende, so dass eine Person in dem spiegelnden Oberflächenbereich größere Ausschnitte ihres Gesichts oder ihr ganzes Gesicht betrachten kann.

Weiterhin ist es bevorzugt, dass das Verhältnis einer Länge einer längsten Seite eines Rechtecks kleinster Fläche, das den spiegelnden Oberflächenbereich einschließt, zu der Länge einer benachbarten Seite kleiner als etwa 4 ist. Hat das Rechteck die Form eines Quadrates, ist eine beliebige Seite des Quadrats als längste Seite aufzufassen. Ein Verkleidungselement mit derartigen Proportionen ist bei gegebener Fläche besonders gut zur Abbildung eines menschlichen Kopfes oder Teilen davon geeignet.

Weiterhin ist es bevorzugt, dass wenigstens die Hälfte der Fläche des spiegelnden Oberflächenbereichs im Wesentlichen plan ist. Ein so dimensionierter, planer Bereich erlaubt dann eine unverzerrte Abbildung einer entsprechend großen Fläche.

Der spiegelnde Oberflächenbereich kann grundsätzlich auf verschiedene Art und Weise erhalten werden. Vorzugsweise wird das Verkleidungselement dabei so ausgebildet, dass es den im Fahrbetrieb und insbesondere beim Öffnen und Schließen einer Kraftfahrzeugtür auftretenden Erschütterungen auch dauerhaft Stand hält.

So ist es bevorzugt, dass das flächige Verkleidungselement eine spiegelnde Metallschicht zur Bildung des spiegelnden Oberflächenbereichs aufweist. Bei dieser Metallschicht kann es sich, je nach Art des Trägermaterials, insbesondere um Chrom enthaltende Schichten handeln, die auf ein geeignetes Trägermaterial mit an sich bekannten Verfahren, beispielsweise durch Aufdampfen oder durch Aufkleben entsprechend beschichteter Folien, aufbringbar sind. Die Metallschicht kann dabei insbesondere noch durch eine transparente Schutzschicht abgedeckt sein, die die Metallschicht vor mechanischen Einflüssen schützt. Dieser Aufbau hat den Vorteil, dass der Träger für die Metallschicht entsprechend weiteren Anforderungen an den Träger gewählt bzw. ausgebildet werden kann.

So ist es besonders bevorzugt, dass das flächige Verkleidungselement einen Metallkörper aufweist, der die Metallschicht trägt. Solche Verkleidungselemente sind sehr robust und erlauben eine sehr gute Verbindung zwischen der Metallschicht und dem eigentlichen Träger.

Alternativ ist es besonders bevorzugt, dass das flächige Verkleidungselement einen Kunststoffkörper aufweist, der die Metallschicht trägt. Der Kunststoffkörper kann dabei insbesondere aus einem Verbundmaterial auf Kunststoffbasis gefertigt sein. Solche flächigen Verkleidungselemente zeichnen sich zum einen durch eine sehr einfache Herstellung und zum anderen durch ein besonders geringes Gewicht aus. Darüber hinaus können sie auch stärker schalldämmend wirken als flächige Verkleidungselemente mit einem Träger aus Metall.

Alternativ ist es bevorzugt, dass das flächige Verkleidungselement durch ein Blech mit einer spiegelnden Oberfläche gebildet ist. Bei diesem Blech kann es sich insbesondere um ein Edelstahlblech mit polierter Oberfläche handeln, das eine spiegelnde Abbildung erlaubt. Ein solches Verkleidungselement zeichnet sich durch große mechanische Stabilität aus. Darüber hinaus ist eine polierte Oberfläche eines solchen Verkleidungselements besonders unempfindlich gegen die Einwirkung von Ölen und Fetten sowie von Reinigungsmitteln zur Beseitigung von Ölen und Fetten, was insbesondere bei einer Verwendung in einem Lastkraftwagen sehr vorteilhaft ist. Besonders bevorzugt wird ein rostfreier Edelstahl verwendet.

Weiterhin ist es bevorzugt, dass die Innenverkleidung dazu ausgebildet ist, eine mit ihr zu verkleidende Kraftfahrzeugtür mechanisch zu verstärken. Auf diese Weise kann die Kraftfahrzeugtür weniger stabil ausgelegt werden, was Material einspart und das Fahrzeuggewicht reduziert. Besonders bevorzugt können dazu an dem Verkleidungselement entsprechende mechanische Verstärkungselemente, beispielsweise in Form von Verstärkungsrippen oder -leisten, vorgesehen sein.

Wie bereits erwähnt ist es besonders bevorzugt, dass die Innenverkleidung zur Verwendung mit einer Lastkraftwagentür ausgebildet ist. Gegenstand der vorliegenden Erfindung ist daher auch eine Lastkraftwagentür mit einer erfindungsgemäßen Innenverkleidung. Dadurch, dass Lastkraftwagentüren typischerweise verglichen mit einem Personenkraftwagen hoch über dem Untergrund, auf dem der Lastkraftwagen ruht; angebracht sind, kann so das flächige Verkleidungselement der Innenverkleidung sehr bequem als Spiegel für eine auf dem Untergrund vor der geöffneten Lastkraftwagentür stehende Person verwendet werden.

Die Erfindung wird im Folgenden weiter anhand der Zeichnungen beispielhaft erläutert. Es zeigen:
- Fig. 1: eine schematische, teilweise Seitenansicht eines Lastkraftwagens,
- Fig. 2: eine schematische Ansicht einer Innenseite einer Lastkraftwagentür in Fig. 1 mit einer Innenverkleidung nach einer bevorzugten Ausführungsform der Erfindung,
- Fig. 3: eine Seitenansicht eines flächigen Verkleidungselements der Innenverkleidung in Fig. 2 mit einem kleinsten umschreibenden Rechteck, und
- Fig. 4: eine schematische perspektivische Darstellung des flächigen Verkleidungselements in Fig. 3.

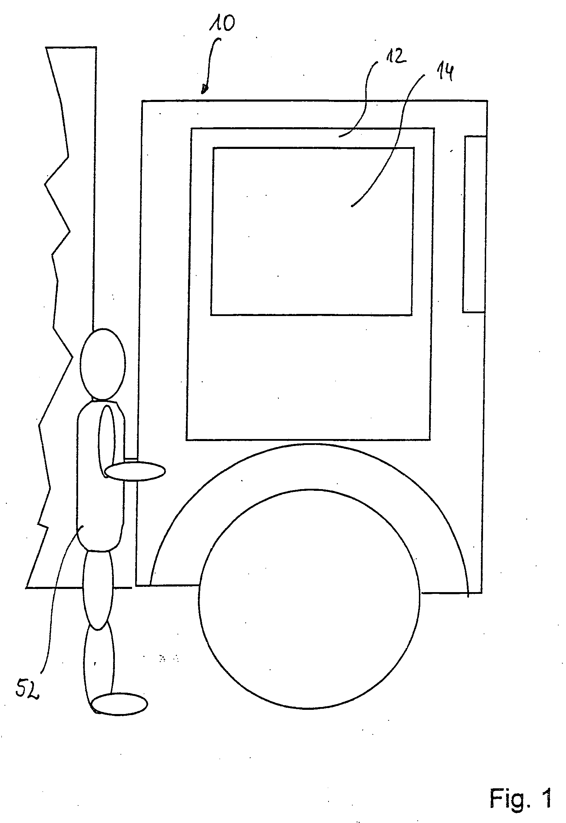

In Fig. 1 weist ein Lastkraftwagen 10 eine Lastkraftwagentür 12 mit einem Seitenfenster 14 auf.

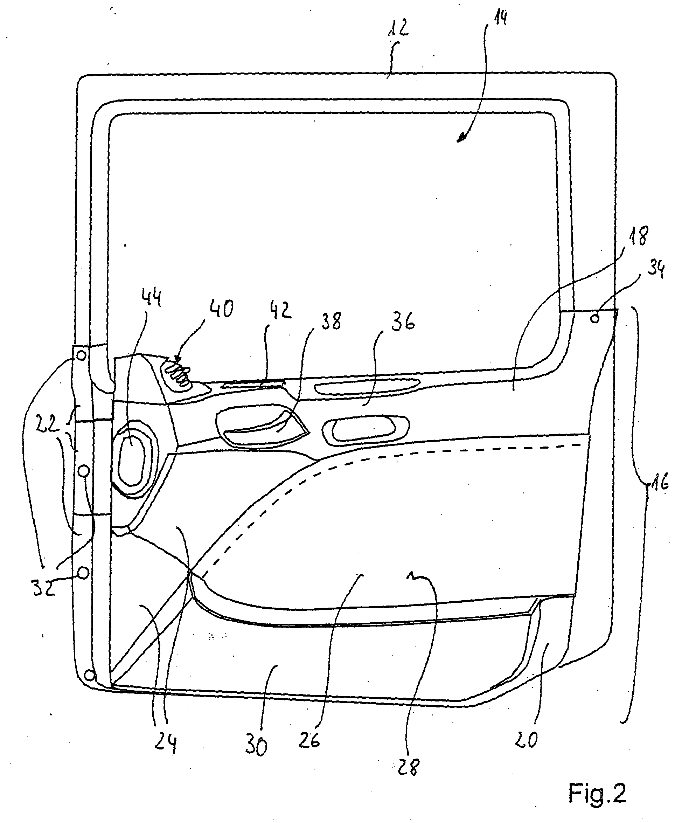

An einer Innenseite der Lastkraftwagentür 12 ist eine Innenverkleidung 16 angebracht (vgl. Fig. 2), die ein Fensterelement 18, ein Bodenelement 20, nahe nicht gezeigten Türscharnieren angeordnete Seitenelemente 22, Füllelemente 24, ein flächiges Verkleidungselement 26 mit einer spiegelnden Oberfläche 28 und ein Taschenelement 30 aufweist.

Das Fensterelement 18, das Bodenelement 20, die Seitenelemente 22 und die Füllelemente 24 sind in bekannter Weise aus Kunststoff bzw. Kunststoffverbundmaterial gefertigt und mit grundsätzlich bekannten Befestigungsmitteln an der Lastkraftwagentür 12 in deren unterem Bereich befestigbar. In Fig. 2 sind dazu nur Befestigungslöcher 32 in den Seitenelementen 22 und ein Befestigungsloch 34 in dem Fensterelement 18 gezeigt, durch die in Fig. 2 nicht erkennbare Schrauben eingedreht sind.

Das Fensterelement 18 ist nach dem Anbau an die Lastkraftwagentür 12 direkt unterhalb einer Öffnung für das Seitenfenster 14 in der Lastkraftwagentür 12 angeordnet und weist einen Türgriff 36, einen Türöffner 38 sowie eine verstellbare Belüftungsdüse 40 und einen Belüftungsschlitz 42 auf. Die Belüftungsdüse 40 und der Belüftungsschlitz 42 sind über einen Lufteinlass 44 mit einer umlaufenden Gummidichtung im geschlossenen Zustand der Lastkraftwagentür 12 mit temperierter Luft versorgbar.

Die Seitenelemente 22 im scharniernahen Bereich der Lastkraftwagentür 12 weisen in Richtung auf die entsprechende Seitenkante der Lastkraftwagentür 12 zulaufende keilförmige Abschnitte auf, die einen gleichmäßigen Übergang zwischen dem Fensterelement 18 und den Füllelementen 24 einerseits und der Seitenkante der Lastkraftwagentür 12 andererseits schaffen.

Das aus Kunststoff gefertigte Taschenelement 30 ist auf dem Bodenelement 20 angebracht, das den unteren Abschluss der Innenverkleidung 16 bildet. Das Taschenelement 30 ist zu einer Seite hin bauchig gewölbt und bildet so zusammen mit dem Bodenelement 20 eine Seitentasche in der Innenverkleidung 16.

Die beiden Füllelemente 24 sind zwischen dem Fensterelement 18, dem Bodenelement 20 und den Seitenelementen 22 angeordnet und dienen allein der Verkleidung der Lastkraftwagentür 12.

Zwischen dem Fensterelement 18 und dem Bodenelement 20 erstreckt sich ausgehend von den Füllelementen 24 das längliche, flächige Verkleidungselement 26 mit der spiegelnden Oberfläche 28 bis zum hinteren Ende der Innenverkleidung 16 an der freien Kante der Lastkraftwagentür 12. Das Verkleidungselement 26 ist damit unterhalb eines Bereichs für eine Öffnung für das Seitenfenster 14 angeordnet.

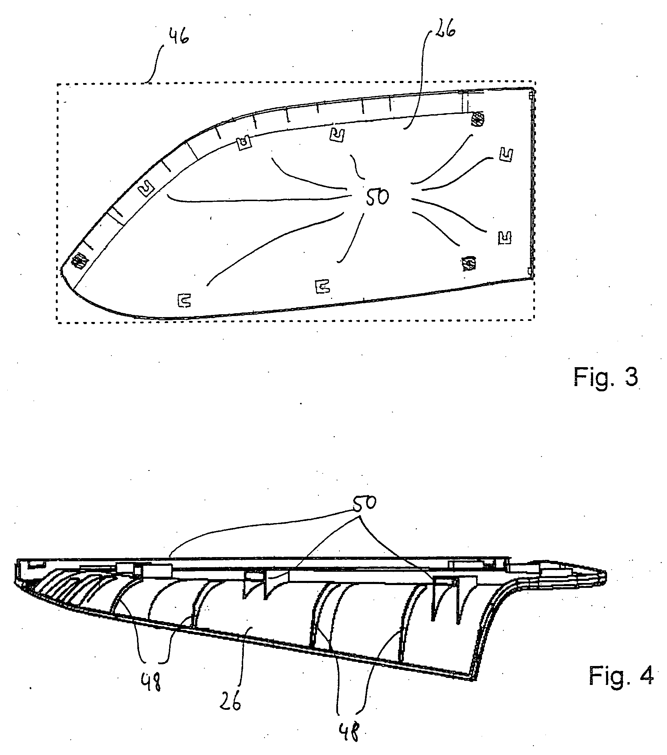

Das flächige Verkleidungselement 26 ist genauer in den Fig. 3 und 4 gezeigt.

Das Verkleidungselement hat eine Fläche von etwa 1500 cm².

Weiterhin weist ein Rechteck 46 kleinster Fläche, das das Verkleidungselement 26 umschließt, ein Seitenverhältnis von etwa 2:1 auf, so dass sich ein spiegelndes Element ungewöhnlich großer Fläche ergibt (vgl. Fig. 3).

Um einen gleichmäßigen Übergang zu dem darüber liegenden Fensterelement 18 zu erhalten, ist das Verkleidungselement 26 an seinem oberen Rand in Richtung auf das Fahrzeuginnere gebogen, wodurch sich gleichzeitig eine Stabilisierung des Verkleidungselements 26 gegen eine Verbiegung in dessen Längsrichtung ergibt (vgl. Fig. 4).

Auf der Seite des flächigen Verkleidungselements 26, die nach einem Einbau der Lastkraftwagentür 12 zugewandt und dann nicht sichtbar ist, sind Verstärkungsrippen 48 sowie Befestigungslaschen 50 zur Befestigung des flächigen Verkleidungselements 26 an der Lastkraftwagentür 12 angebracht.

Insgesamt wirkt damit das flächige Verkleidungselement 26 wie auch die anderen Innenverkleidungselemente als mechanische Verstärkung für die Lastkraftwagentür 12.

Weiterhin ist das flächige Verkleidungselement 26 an der hinteren Kante umgebogen, so dass es im eingebauten Zustand um eine hintere Kante der Lastkraftwagentür 12 herumgreift.

Das flächige Verkleidungselement 26 ist aus dem gleichen Material wie die anderen Elemente 18, 20, 22 und 24 der Innenverkleidung 16 gefertigt. Die von der Lastkraftwagentür 12 abgewandte Oberfläche 28 des flächigen Verkleidungselements ist jedoch möglichst glatt ausgebildet. Diese, nach dem Anbau an die Lastkraftwagentür 12 sichtbare, Oberfläche 28 ist mit einer Chromlegierung spiegelnd beschichtet.

Damit ergibt sich bis auf den oberen gebogenen Rand, der weniger als etwa 15 % der Gesamtfläche des flächigen Verkleidungselements 26 ausmacht, eine große, plane, spiegelnde Oberfläche, die wenigstens 85 % der Fläche des Verkleidungselements 26 umfasst und die eine Spiegelung ohne wesentliche Verzerrungen erlaubt.

Durch die Anbringung der Innenverkleidung 16 an der Lastkraftwagentür 12 des großen Lastkraftwagens 10 in Fig. 1 kann sich so eine neben dem Lastkraftwagen stehende Person 52 einfach in dem flächigen Verkleidungselement 26 mit der spiegelnden Oberfläche 28 an der geöffneten Lastkraftwagentür 12 betrachten, um sich beispielsweise zu kämmen oder zu rasieren.

Weiterhin ist es auch möglich, von einem Sitz in dem Lastkraftwagen 10 neben der Lastkraftwagentür 12 bei geöffneter Lastkraftwagentür 12 mittels des flächigen Verkleidungselements 26 mit der spiegelnden Oberfläche 28 einen Fahrbahn- oder Gehwegbereich schräg neben dem Lastkraftwagen 10 einzusehen.

### Bezugszeichenliste

- 10: Lastkraftwagen
- 12: Lastkraftwagentür
- 14: Seitenfenster
- 16: Innenverkleidung
- 18: Fensterelement
- 20: Bodenelement
- 22: Seitenelemente
- 24: Füllelemente
- 26: flächiges Verkleidungselement
- 28: spiegelnde Oberfläche
- 30: Taschenelement
- 32: Befestigungslöcher
- 34: Befestigungsloch
- 36: Türgriff
- 38: Türöffner
- 40: Belüftungsdüse
- 42: Belüftungsschlitz
- 44: Lufteinlass
- 46: Rechteck
- 48: Verstärkungsrippen
- 50: Befestigungslaschen
- 52: Person

## Patentansprüche

1. Innenverkleidung für eine Kraftfahrzeugtür (12) mit einem flächigen Verkleidungselement (26), das einen im eingebauten Zustand sichtbaren, spiegelnden Oberflächenbereich (28) aufweist.

2. Innenverkleidung nach Anspruch 2,
**dadurch gekennzeichnet,**
**dass** das Verkleidungselement (26) an bzw. in der Innenverkleidung so angeordnet ist, dass es nach Verbindung der Innenverkleidung (16) mit der Kraftfahrzeugtür (12) unterhalb einer Öffnung für ein Fenster (14) in der Kraftfahrzeugtür (12) angeordnet ist.

3. Innenverkleidung nach Anspruch 1 oder 2,
**dadurch gekennzeichnet,**
**dass** das flächige Verkleidungselement (26) in der Innenverkleidung (16) so angeordnet ist, dass es im Wesentlichen parallel zu einer Fläche einer Kraftfahrzeugtür (12) angeordnet ist, wenn die Innenverkleidung (16) an der Kraftfahrzeugtür (12) angebracht ist.

4. Innenverkleidung nach einem der vorhergehenden Ansprüche,
**dadurch gekennzeichnet,**
**dass** die Fläche des spiegelnden Oberflächenbereichs größer als 30 cm² ist.

5. Innenverkleidung nach einem der vorhergehenden Ansprüche,
**dadurch gekennzeichnet,**
**dass** das Verhältnis einer Länge einer längsten Seite eines Rechtecks kleinster Fläche, das den spiegelnden Oberflächenbereich einschließt, zu der Länge einer benachbarten Seite kleiner als etwa 4 ist.

6. Innenverkleidung nach einem der vorhergehenden Ansprüche,
**dadurch gekennzeichnet,**
**dass** wenigstens die Hälfte der Fläche des spiegelnden Oberflächenbereichs (28) im Wesentlichen plan ist.

7. Innenverkleidung nach einem der vorhergehenden Ansprüche,
**dadurch gekennzeichnet,**
**dass** das flächige Verkleidungselement (26) eine spiegelnde Metallschicht zur Bildung des spiegelnden Oberflächenbereichs (28) aufweist.

8. Innenverkleidung nach Anspruch 7,
**dadurch gekennzeichnet,**
**dass** das flächige Verkleidungselement (26) einen Metallkörper aufweist, der die Metallschicht trägt.

9. Innenverkleidung nach Anspruch 8,
**dadurch gekennzeichnet,**
**dass** das flächige Verkleidungselement (26) einen Kunststoffkörper aufweist, der die Metallschicht trägt.

10. Innenverkleidung nach einem der vorhergehenden Ansprüche,
**dadurch gekennzeichnet,**
**dass** das flächige Verkleidungselement (26) durch ein Blech mit einer spiegelnden Oberfläche gebildet ist.

11. Innenverkleidung nach einem der vorhergehenden Ansprüche,
**dadurch gekennzeichnet,**
**dass** die Innenverkleidung (16) dazu ausgebildet ist, eine mit ihr zu verkleidende Kraftfahrzeugtür (12) mechanisch zu verstärken.

12. Lastkraftwagentür mit einer Innenverkleidung (16) nach einem der vorhergehenden Ansprüche.
